# EUROPEAN PATENT SPECIFICATION

(11) **EP 2 244 415 B1**
(45) Date of publication and mention of the grant of the patent: **27.11.2019**
(21) Application number: 10160603.6
(22) Date of filing: 21.04.2010
(51) Int. Cl.: H04N 21/258, H04N 21/414, H04N 21/658, H04N 21/81, H04H 60/15, H04H 60/91, H04L 9/32, H04N 21/4623, H04N 7/173, H04W 12/06, H04H 20/57

(54) **Downloadable conditional access system server, digital multimedia broadcasting terminal, and method of providing downloadable conditional access system service**
Server mit herunterladbarem bedingtem Zugriffssystem, digitales Multimediarundfunkgerät und Verfahren zur Bereitstellung eines Dienstes mit einem herunterladbaren bedingten Zugriffssystem
Serveur de système d'accès conditionnel téléchargeable, terminal de diffusion multimédia numérique, et procédé pour fournir un service de système d'accès conditionnel téléchargeable

(30) Priority: 24.04.2009 KR 20090035893
(43) Date of publication of application: 27.10.2010
(73) Proprietor: Electronics and Telecommunications Research Institute, Daejeon 305-700 (KR)
(72) Inventor: Jeong, Young Ho, 305-500, Daejeon (KR); Kwon, O Hyung, 305-755, Daejeon (KR); Lee, Soo In, 302-120, Daejeon (KR)
(74) Representative: Betten & Resch

(56) References cited:
- EP-A2- 1 772 986
- US-A1- 2003 005 435
- US-A1- 2007 261 076
- US-A1- 2008 098 212

## Description

### BACKGROUND

### 1. Field of the Invention

Embodiments of the present invention relate to a Downloadable Conditional Access System (DCAS) server, a Digital Multimedia Broadcasting (DMB) terminal, and a method of providing a DCAS service to manage the DCAS service in a DMB system.

### 2. Description of the Related Art

A Downloadable Conditional Access System (DCAS) has been first used in cable broadcasting. An OpenCable specification, defined in a cable broadcasting field, requires a conditional access module to be separated from a receiver of a subscriber to prevent monopolization by a receiver provider, and provide a cable broadcasting service regardless of a service provider and service area.

Accordingly, a conditional access module, separated from a receiver, has been standardized as a CableCARD such as a Personal Computer Memory Card International Association (PCMCIA) card. A cable broadcasting service provider may provide a fee-based broadcasting service by providing only a CableCARD to a subscriber instead of by lending a receiver to a subscriber,

The use of a separated conditional access module was expected to broaden a selection scope of receivers and reduce a cost related to a CAS. However, it failed due to an increase in CableCARD prices, an increase in management costs, and a lack of stimulation in a receiver market.

Accordingly, a DCAS technology that enables a fee-based broadcasting service by downloading a conditional access software to a receiver of a subscriber using an existing cable network, without a separate hardware-based conditional access module is required.

Currently, a CAS solution to perform a fee-based broadcasting service in a DMB system is the focus of attention.

However, such a CAS solution may enable an access to only fee-based broadcasting service of a particular broadcasting provider. Thus, researches on a DCAS technology applicable in a DMB system are required.

EP 1 772 986 A2 discloses a mobile communication terminal for efficient digital broadcasting conditional access and a method of the mobile communication terminal. The mobile communication terminal includes a digital broadcasting receiver for receiving a scrambled digital broadcasting transport stream, a Subscriber Identify Module (SIM) card unit for generating a decoding key for descrambling the scrambled digital broadcasting transport stream, a multimedia unit for extracting from the scrambled digital broadcasting transport stream broadcasting viewing restriction information and broadcasting viewing entitlement information and descrambling the scrambled digital broadcasting transport stream using the decoding key generated by the smart card unit, and a controller for transmitting to the smart card unit the broadcasting viewing restriction information and broadcasting viewing entitlement information extracted by the multimedia unit in a digital broadcasting reception mode to control the smart card unit to generate the decoding key and transmitting the decoding key generated by the smart card unit to the multimedia unit.

US 2003/005435 A1 discloses a conditional access system,in which entitlement control messages (ECMs) containing encryption keys used to encrypt a program transmission, are sent to a set-top box over a secure communications channel separate from the channel used for transmission of the encrypted program.

US 2007/261076 A1 discloses a conditional access system in which entitlement management messages (EMMs) sent to a receiver include transmission time information for future EMMs. The transmission time information is used at the receiver to control the receiver so that it is powered on only when required to receive the future EMMs.

### SUMMARY

Objects of the present invention are solved by the subject matters of independent claims. Dependent claims define further exemplary embodiments of the present invention.

An aspect of the present invention provides a DCAS service system that may provide a DCAS solution using a DMB network and a mobile communication network in a DMB system, and thereby may enable a conditional access module to be changed without installing or changing an additional hardware in a DMB terminal.

According to an aspect of the present invention, there is provided a Downloadable Conditional Access System (DCAS) server, including: a message transmission unit to transmit a DCAS message to a Digital Multimedia Broadcasting {DMB) terminal through a first data channel, the DCAS message including DCAS information; an image transmission unit to transmit a common conditional access client image to the DMB terminal through a second data channel, and an information transmission unit to perform authentication of the DMB terminal when the DMB terminal requests personalized information through a mobile communication channel, and to transmit the personalized information to the DMB terminal through the mobile communication channel, the personalized information being associated with management of the common conditional access client image, wherein the DMB terminal determines whether to receive the common conditional access client image based on the DCAS message, performs mutual authentication through the mobile communication channel, decodes the common conditional access client image based on the personalized information, and embeds the common conditional access client image.

According to an aspect of the present invention, there is provided a DMB terminal, including: a message receiving unit to receive a DCAS message from a DCAS server through a first data channel, the DCAS message including DCAS information; a determination unit to determine whether to receive a common conditional access client image based on the DCAS message; an image receiving unit to receive the common conditional access client image from the DCAS server through a second data channel, when it is determined to receive the common conditional access client image; an authentication unit to perform mutual authentication associated with DCAS service management through a mobile communication channel; an information request unit to request the DCAS server for personalized information through the mobile communication channel, the personalized information being associated with management of the common conditional access client image; and an embedding unit to receive the personalized information from the DCAS server through the mobile communication channel, to decode the common conditional access client image based on the personalized information, and to embed the common conditional access client image. According to an aspect of the present invention, there is provided a method of providing a DCAS service, the method including: transmitting, by a DCAS server, a DCAS message to a DMB terminal through a first data channel, the DCAS message including DCAS information; transmitting, by the DCAS server, a common conditional access client image, to the DMB terminal through a second data channel; performing, by the DMB terminal, mutual authentication associated with DCAS service management through a mobile communication channel; requesting, by the DMB terminal, the DCAS server for personalized information through the mobile communication channel, the personalized information being associated with management of the common conditional access client image; performing, by the DCAS server, authentication of the DMB terminal, and transmitting the personalized information to the DMB terminal through the mobile communication channel; and decoding, by the DMB terminal, the common conditional access client image based on the personalized information, and embedding the common conditional access client image.

### BRIEF DESCRIPTION OF THE DRAWINGS

These and/or other aspects, features, and advantages of the invention will become apparent and more readily appreciated from the following description of exemplary embodiments, taken in conjunction with the accompanying drawings of which:
FIG. 1 is a block diagram illustrating a Downloadable Conditional Access System (DCAS) service system according to an embodiment of the present invention;
FIG. 2 is a diagram illustrating a configuration of a Fast Information Group (FIG) frame according to an embodiment of the present invention;
FIG. 3 is a block diagram illustrating a configuration of a DCAS server according to an embodiment of the present invention;
FIG. 4 is a block diagram illustrating a configuration of a Digital Multimedia Broadcasting (DMB) terminal according to an embodiment of the present invention; and
FIG. 5 is a flowchart illustrating a method of providing a DCAS service according to an embodiment of the present invention.

### DETAILED DESCRIPTION

Reference will now be made in detail to exemplary embodiments of the present invention, examples of which are illustrated in the accompanying drawings, wherein like reference numerals refer to the like elements throughout. Exemplary embodiments are described below to explain the present invention by referring to the figures.

Currently, an embedded type-Conditional Access System (CAS) solution is mainly used in a terrestrial and satellite Digital Multimedia Broadcasting (DMB) service for a fee-based broadcasting service.

Accordingly, a DMB terminal may belong to a CAS system of a corresponding fee-based broadcasting service, and access only fee-based broadcasting service provided by a particular DMB service provider.

When a user of a DMB terminal desires to use a fee-based broadcasting service of another DMB service provider, it is required to replace the DMB terminal with a DMB terminal including a CAS module of the other DMB service provider.

Accordingly, a Downloadable Conditional Access System (DCAS) solution is to be applied to enable an access to various fee-based broadcasting services in a DMB system.

However, since a DMB system may use a one-way DMB network as opposed to a two-way Hybrid Fiber Coax (HFC) network where researches on a DCAS solution is actively conducted, a method to provide an optimized DCAS service in the DMB system is required.

A DCAS service system according to an embodiment of the present invention may provide a DCAS solution using a DMB network and a mobile communication network in a DMB system, and thereby may enable a conditional access module to be changed without installing or changing an additional hardware in a DMB terminal.

Through this, the DCAS service system may enable a DMB terminal user to easily use various fee-based broadcasting services.

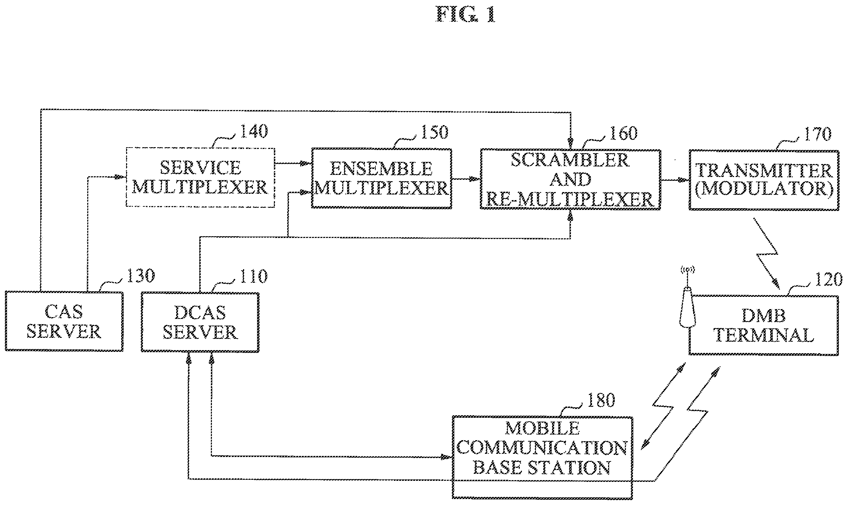

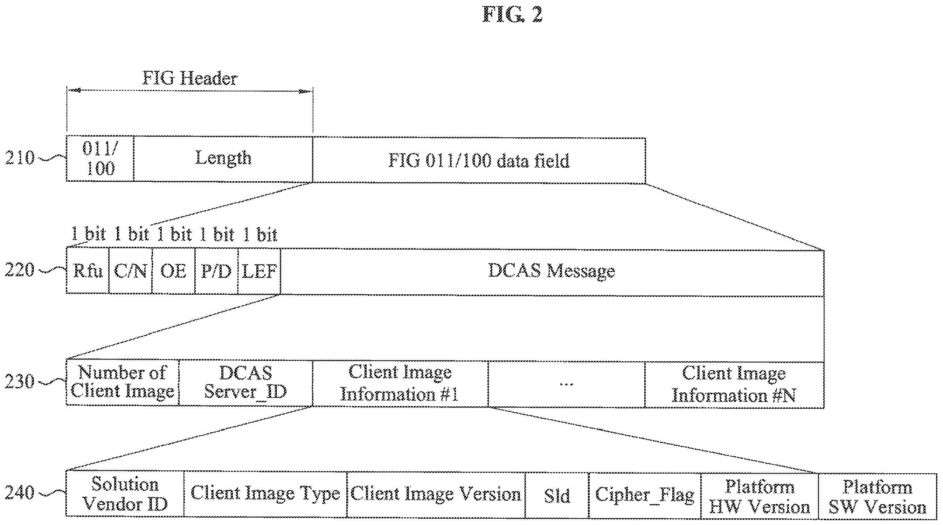

An operation of the DCAS service system is described in detail with reference to FIGS. 1 and 2.

FIG. 1 is a block diagram illustrating a DCAS service system according to an embodiment of the present invention.

Referring to FIG. 1, the DCAS service system may include a DCAS server 110, a DMB terminal 120, a CAS server 130, a service multiplexer 140, an ensemble multiplexer 150, a scrambler and a re-multiplexer 160, a transmitter (modulator) 170, and a mobile communication base station 180.

In general, a DMB service stream may be modulated into a Radio Frequency (RF) signal by the transmitter 170 through the service multiplexer 140 and the ensemble multiplexer 150, and transmitted to the DMB terminal 120.

In this instance, the CAS server 130 may transmit Entitlement Management Message/Entitlement Control Message (EMM/ECM) information through a data service channel, for access control of a corresponding service stream. Also, the CAS server 130 may transmit Control Word (CW) information to the scrambler 160 for encryption of data stream.

The DCAS server 110 may transmit a DCAS message including DCAS information to the DMB terminal 120 through a first data channel.

Also, the DCAS server 110 may transmit a common conditional access client image to the DMB terminal 120 through a second data channel.

Here, the common conditional access client image may include a conditional access-related software module such as a CAS, a Digital Rights Management (DRM), an Authorized Service Domain (ASD), and the like.

In this instance, a conditional access-related software module associated with the CAS may indicate an EMM/ECM processing module for CW extraction.

According to an embodiment of the present invention, the DCAS information may include type information (CAS, DRM, ASD, and the like) of the common conditional access client image, version information of the common conditional access client image, service identifier (ID) information of the second data channel, information about whether the common conditional access client image is encrypted, ID information of the DCAS server 110, hardware version information and software version information of a DCAS platform in the DMB terminal 120, and conditional access solution vendor ID information.

The DMB terminal 120 may obtain the conditional access solution vendor ID information, and the version information of the common conditional access client image corresponding to a hardware and software version of the DCAS platform in the DMB terminal 120, by parsing the DCAS message periodically transmitted through the first data channel. Also, the DMB terminal 120 may check a version of a conditional access client, currently operated in the DMB terminal 120, and a conditional access solution vendor ID based on the version information of the common conditional access client image and the conditional access solution vendor ID information.

When the conditional access client, currently operated in the DMB terminal 120, is required to be updated, the DMB terminal 120 may parse the DCAS message and obtain the service ID information of the second data channel where the common conditional access client image is transmitted.

Also, the DMB terminal 120 may receive the common conditional access client image from the DCAS server 110 based on the service ID information of the second data channel, and store the common conditional access client image in a DCAS platform which is safe from external hacking.

According to an embodiment of the present invention, when the DMB system illustrated in FIG. 1 is a terrestrial DMB system, the first data channel may be a Fast Information Channel (FIC), and the second data channel may be a Main Service Channel (MSC).

That is, the DCAS server 110 may transmit the DCAS message and the common conditional access client image to the ensemble multiplexer 150 or the re-multiplexer 160, and thus the DCAS message may be transmitted to the DMB terminal 120 through the FIC, and the common conditional access client image may be transmitted to the DMB terminal 120 through the MSC.

In general, since program configuration information and service channel-related information are included in the FIC, the DMB terminal 120 may first analyze the FIC and access a desired broadcasting service in the MSC.

That is, the DCAS server 110 may transmit the DCAS message to the DMB terminal 120 through the FIC, and thereby may first analyze the FIC, and determine whether to update the conditional access client currently operated in the DMB terminal 120.

Also, the DCAS server 110 may repeatedly transmit the common conditional access client image to the DMB terminal 120 through the MSC, and thereby may efficiently manage a DMB channel.

The DMB channel may be efficiently managed since the DCAS service may be appropriately provided to the DMB terminal 120 even when a data transmission rate is set relatively low, although the data transmission rate of the corresponding service channel is in inverse proportion to a time spent when the DMB terminal 120 downloads the common conditional access client image.

Hereinafter, a configuration of a Fast Information Group (FIG) frame to enable the DCAS server 110 to transmit the DCAS message to the DMB terminal 120 through the FIC is described in detail with reference to FIG. 2.

FIG. 2 is a diagram illustrating a configuration of a FIG frame according to an embodiment of the present invention.

The DCAS server 110 may define a FIG frame, that may transmit a DCAS message, as the FIG frame illustrated in FIG. 2, using a FIG type '011' or FIG type '100' which is not currently used in a terrestrial DMB specification, Accordingly, compatibility of an existing DMB terminal may be maintained.

The FIG frame configured by the DCAS server 110 may include a FIG header and a FIG data field, as illustrated in a data structure 210 of FIG. 2.

The FIG data field may include a FIG data field header and a DCAS message, as illustrated in a data structure 220 of FIG. 2.

Here, a Reserved for future use (Rfu), Current/Next (C/N) service information version, Other Ensembles (OE), Program/Data (P/D), and List Element Flag (LEF) information, which correspond to the FIG data field header, may be configured the same as an existing FIG frame. Here, the P/D information may be used to ascertain whether a service ID (SID) is for program service or data service.

The DCAS message may include information about a number of common conditional access client images, an ID value of the DCAS server 110, and information about the common conditional access client image, as illustrated in a data structure 230 of FIG. 2. Here, a number of pieces of information about the common conditional access client image may correspond to the number of common conditional access client images.

As illustrated in a data structure 240 of FIG. 2, the information about the common conditional access client image may include type information of the common conditional access client image, version information of the common conditional access client image, service ID information of a data channel where the common conditional access client image is transmitted, a flag about whether the common conditional access client image is encrypted, hardware version information and software version information of a DCAS platform, and conditional access solution vendor ID information.

Also, the information described in the data structure 240 may have the same size and be configured for each common conditional access client image.

The DMB terminal 120 may receive the DCAS message transmitted through the FIC, and determine whether to update the conditional access client image in the DMB terminal 120.

The DMB terminal 120 may check the FIG header information and ascertain whether the DCAS message is included in the FIG frame.

Also, the DMB terminal 120 may determine whether to update the conditional access client image in the DMB terminal 120 based on the version information of the common conditional access client image and the conditional access solution vendor ID information, included in the FIG frame for the DCAS message.

Sequentially, the DMB terminal 120 may parse the service ID information of the data channel where the common conditional access client image is transmitted, in the FIG frame for the DCAS message. Also, the DMB terminal 120 may retrieve a data stream including the service ID from the MSC, and store the data stream. Accordingly, downloading the common conditional access client image may be completed.

The configuration of the FIG frame has been described with reference to FIG. 2. Hereinafter, the DCAS service system is described by referring again to FIG. 1.

When the common conditional access client image is received from the DCAS server 110, the DMB terminal 120 may perform mutual authentication through the mobile communication channel for DCAS service.

In this instance, two methods for mutual authentication may be performed by the DMB terminal 120.

In one method, a mobile communication service provider and a DMB service provider may build a DCAS infrastructure in conjunction with each other.

In this instance, the DMB terminal 120 may perform mutual authentication based on an authentication protocol provided by a mobile communication system such as a Code Division Multiple Access (CDMA), a wireless broadband Internet (WiBro), a Long Term Evolution (LTE), and the like.

When the DMB terminal 120 is a two-way DMB terminal, a user of the DMB terminal 120 has been already registered in a subscriber of the mobile communication service provider. Accordingly, the DMB terminal 120 may perform mutual authentication in a mobile communication area.

In this instance, the DMB terminal 120 may use a session key shared by the mobile communication base station 180 and the DMB terminal 120, and thereby may secure the mobile communication channel.

In the other method, the mobile communication service provider may provide a simple return channel as the mobile communication channel, and the DMB service provider may authenticate the DMB terminal 120 through the mobile communication channel.

In this instance, the DMB terminal 120 may perform mutual authentication with the DCAS server 110 based on a protocol separately defined through the mobile communication channel. The DCAS server 110 may be located in a broadcasting area.

Through this, the DMB service provider may independently provide and manage the DCAS service.

After performing mutual authentication, the DMB terminal 120 may request the DCAS server 110 for personalized information through the mobile communication channel. The personalized information may be used to manage the common conditional access client image.

When the personalized information is requested from the DMB terminal 120, the DCAS server 110 may perform authentication of the DMB terminal 120 and transmit the personalized information to the DMB terminal 120 through the mobile communication channel.

According to an embodiment of the present invention, the DCAS service system may include a gateway server (not illustrated) for secure communication connection to provide the DCAS service in the mobile communication area and the broadcasting area.

In this instance, according to an embodiment of the present invention, the DMB terminal 120 may request the personalized information through the gateway server existing in the mobile communication area.

Also, according to an embodiment of the present invention, the DCAS server 110 may perform authentication of the DMB terminal 120 through a security channel formed between the gateway server and the DCAS server 110.

Also, according to an embodiment of the present invention, the personalized information may include a decryption key with respect to the common conditional access client image, a master key, personalized information required for CAS or DCAS, and the like. The master key may be a root key required to obtain a CW by parsing EMM/ECM.

When the DCAS server 110 transmits the personalized information, the DMB terminal 120 may receive the personalized information from the DCAS server 110, decode the common conditional access client image using the decryption key included in the personalized information, and embed the decoded common conditional access client image.

In this instance, the DMB terminal 120 may embed the common conditional access client image through a DCAS platform which is safe from external hacking.

When the embedding of the common conditional access client image is completed, the DMB terminal 120 may transmit DCAS-related information, purchase information, and the like to the DCAS server 110 through the mobile communication channel. The DCAS-related information may include a result of the embedding, and the like, and the purchase information may include information about an Impulse Pay Per View (IPPV) service used for accounting, and the like.

In this instance, the DCAS server 110 may manage DCAS-related information for each subscriber or for each terminal using the DCAS-related information received from the DMB terminal 120.

That is, the DCAS server 110 may transmit the common conditional access client image and information associated with the common conditional access client image to the DMB terminal 120 through a DMB channel, and the DMB terminal 120 may receive the personalized information for decoding the common conditional access client image from the DCAS server 110 through the mobile communication channel. Accordingly, the DCAS service system may efficiently manage the DCAS service in a one-way DMB system.

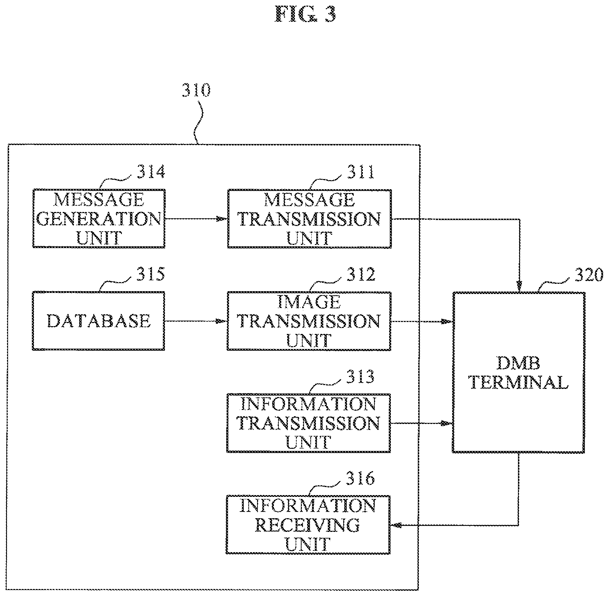

FIG. 3 is a block diagram illustrating a configuration of a DCAS server 310 according to an embodiment of the present invention.

The DCAS server 310 and a DMB terminal 320 are illustrated in FIG. 3.

The DCAS server 310 may include a message transmission unit 311, an image transmission unit 312, and an information transmission unit 313.

The message transmission unit 311 may transmit a DCAS message including DCAS information to the DMB terminal 320 through a first data channel.

The image transmission unit 312 may transmit a common conditional access client image to the DMB terminal 320 through a second data channel.

According to an embodiment of the present invention, the first data channel may be a FIC, and the second data channel may be an MSC.

Also, according to an embodiment of the present invention, the DCAS information may include type information of the common conditional access client image, version information of the common conditional access client image, service ID information of the second data channel, information about whether the common conditional access client image is encrypted, ID information of the DCAS server 310, hardware version information and software version information of a DCAS platform in the DMB terminal 320, and conditional access solution vendor ID information.

The information transmission unit 313 may perform authentication of the DMB terminal 320 when the DMB terminal 320 requests personalized information through a mobile communication channel. Here, the personalized information may be associated with management of the common conditional access client image. Also, the information transmission unit 313 may transmit the personalized information to the DMB terminal 320 through the mobile communication channel.

The DMB terminal 320 may determine whether to receive the common conditional access client image based on the DCAS message, perform mutual authentication through the mobile communication channel, and decode the common conditional access client image based on the personalized information. Also, the DMB terminal 320 may embed the common conditional access client image.

According to an embodiment of the present invention, the DCAS server 310 may further include a message generation unit 314 and a database 315.

The message generation unit 314 may generate the DCAS message.

The common conditional access client image may be stored in the database 315.

According to an embodiment of the present invention, the DMB terminal 320 may parse the DCAS message to obtain the conditional access solution vendor ID information and the version information of the common conditional access client image corresponding to a hardware and software version of the DCAS platform in the DMB terminal 320. Also, the DMB terminal 320 may determine whether to update a conditional access client image, previously embedded in the DMB terminal 320, based on the version information of the common conditional access client image and the conditional access solution vendor ID information.

In this instance, according to an embodiment of the present invention, when the conditional access client image is required to be updated, the DMB terminal 320 may parse the DCAS message, obtain the service ID information of the second data channel, and receive the common conditional access client image based on the service ID information of the second data channel.

Also, according to an embodiment of the present invention, the DMB terminal 320 may request the DCAS server 310 for the personalized information through a gateway server connecting a mobile communication network and a DMB network.

In this instance, according to an embodiment of the present invention, the information transmission unit 313 may perform authentication of the DMB terminal 320 through a security channel formed between the DCAS server 310 and the gateway server.

According to an embodiment of the present invention, the DCAS server 310 may further include an information receiving unit 316.

The information receiving unit 316 may receive content purchase information and a result of embedding the common conditional access client image from the DMB terminal 320 through the mobile communication channel.

The configuration of the DCAS server 310 has been described by referring to FIG. 3. Since an operation of each of the DCAS server 310 and the DMB terminal 320 may correspond to the operation of the DCAS server 110 and the DMB terminal 120 described with reference to FIGS. 1 and 2, further detailed descriptions will be omitted herein.

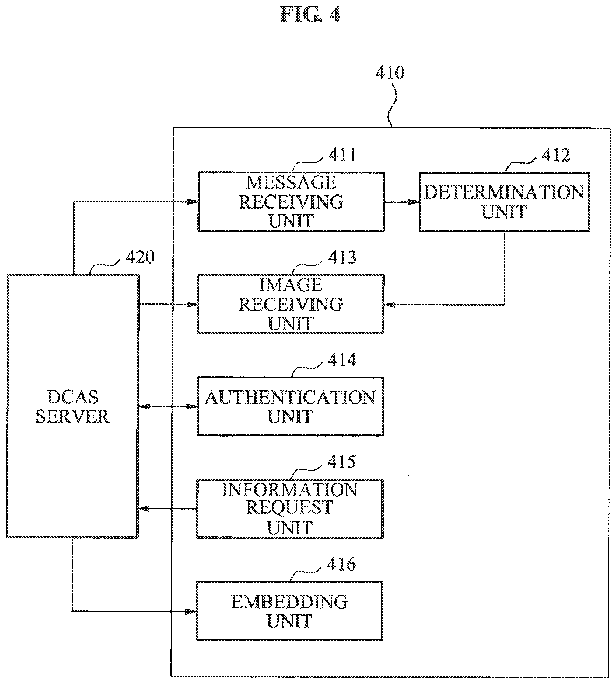

FIG. 4 is a block diagram illustrating a configuration of a DMB terminal 410 according to an embodiment of the present invention.

The DMB terminal 410 and a DCAS server 420 are illustrated in FIG. 4.

The DMB terminal 410 may include a message receiving unit 411, a determination unit 412, an image receiving unit 413, an authentication unit 414, an information request unit 415, and an embedding unit 416.

The message receiving unit 411 may receive a DCAS message including DCAS information from the DCAS server 420 through a first data channel.

The determination unit 412 may determine whether to receive a common conditional access client image based on the DCAS message.

The image receiving unit 413 may receive the common conditional access client image from the DCAS server 420 through a second data channel, when it is determined to receive the common conditional access client image.

According to an embodiment of the present invention, the first data channel may be a FIC, and the second data channel may be an MSC.

Also, according to an embodiment of the present invention, the DCAS information may include type information of the common conditional access client image, version information of the common conditional access client image, service ID information of the second data channel, information about whether the common conditional access client image is encrypted, ID information of the DCAS server 420, hardware version information and software version information of a DCAS platform in the DMB terminal 410, and conditional access solution vendor ID information.

In this instance, according to an embodiment of the present invention, the determination unit 412 may parse the DCAS message to obtain the conditional access solution vendor ID information and the version information of the common conditional access client image corresponding to a hardware and software version of the DCAS platform in the DMB terminal 410. Also, the determination unit 412 may determine whether to update a conditional access client image, previously embedded in the DMB terminal 410, based on the version information of the common conditional access client image and the conditional access solution vendor ID information.

In this instance, when the conditional access client image is required to be updated, the image receiving unit 413 may parse the DCAS message, obtain the service ID information of the second data channel, and receive the common conditional access client image based on the service ID information of the second data channel.

The authentication unit 414 may perform mutual authentication associated with DCAS service management through a mobile communication channel.

The information request unit 415 may request the DCAS server 420 for personalized information through the mobile communication channel. The personalized information may be associated with management of the common conditional access client image.

According to an embodiment of the present invention, the information request unit 415 may request the personalized information through a gateway server connecting a mobile communication network and a DMB network.

The embedding unit 416 may receive the personalized information from the DCAS server 420 through the mobile communication channel, decode the common conditional access client image based on the personalized information, and embed the common conditional access client image.

The configuration of the DMB terminal 410 has been described with reference to FIG. 4. Since an operation of each of the DMB terminal 410 and the DCAS server 420 may correspond to the operation of the DMB terminal 120 and the DCAS server 110 described with reference to FIGS. 1 and 2, further detailed descriptions will be omitted herein.

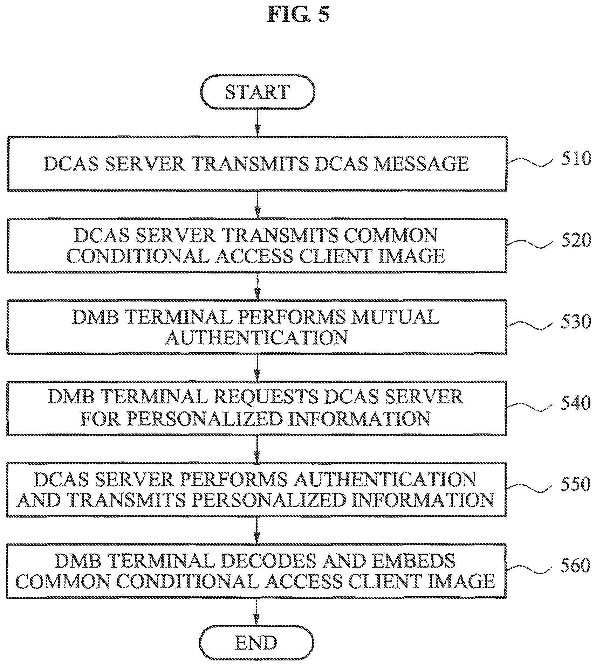

FIG. 5 is a flowchart illustrating a method of providing a DCAS service according to an embodiment of the present invention.

In operation 510, a DCAS server may transmit a DCAS message including DCAS information to a DMB terminal through a first data channel.

In operation 520, the DCAS server may transmit a common conditional access client image to the DMB terminal through a second data channel.

According to an embodiment of the present invention, the DCAS information may include type information of the common conditional access client image, version information of the common conditional access client image, service ID information of the second data channel, information about whether the common conditional access client image is encrypted, ID information of the DCAS server, hardware version information and software version information of a DCAS platform in the DMB terminal, and conditional access solution vendor ID information.

Also, according to an embodiment of the present invention, the first data channel may be a FIC, and the second data channel may be an MSC.

In operation 530, the DMB terminal may perform mutual authentication associated with DCAS service management through a mobile communication channel.

Prior to operation 530, the method of providing a DCAS service may further include an operation where the DMB terminal determines whether to receive the common conditional access client image based on the DCAS message.

When the DMB terminal determines to receive the common conditional access client image, the method of providing a DCAS service may further include an operation of receiving the common conditional access client image from the DCAS server.

In operation 540, the DMB terminal may request the DCAS server for personalized information through the mobile communication channel. The personalized information may be associated with management of the common conditional access client image.

In operation 540, according to an embodiment of the present invention, the DMB terminal may request the personalized information through a gateway server connecting the mobile communication network and a DMB network.

In operation 550, the DCAS server may perform authentication of the DMB terminal, and transmit the personalized information to the DMB terminal through the mobile communication channel.

In operation 550, according to an embodiment of the present invention, the DCAS server may perform authentication of the DMB terminal through a security channel formed between the DCAS server and the gateway server.

In operation 560, the DMB terminal may decode the common conditional access client image based on the personalized information, and embed the common conditional access client image.

After operation 560, the method of providing a DCAS service may further include an operation where the DMB terminal transmits content purchase information and a result of embedding the common conditional access client image to the DCAS server through the mobile communication channel.

The method of providing a DCAS service has been described with reference to FIG. 5. Since the method of providing a DCAS service may correspond to the operation method of the DCAS service system described with reference to FIGS. 1 and 2, further detailed descriptions will be omitted.

The method of providing a DCAS service according to the above-described exemplary embodiments of the present invention may be recorded in computer-readable media including program instructions to implement various operations embodied by a computer. The media may also include, alone or in combination with the program instructions, data files, data structures, and the like. Examples of computer-readable media include magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described exemplary embodiments of the present invention, or vice versa.

Although a few exemplary embodiments of the present invention have been shown and described, the present invention is not limited to the described exemplary embodiments. Instead, it would be appreciated by those skilled in the art that changes may be made to these exemplary embodiments without departing from the principles of the invention, the scope of which is defined by the claims and their equivalents.

## Claims

1. A Downloadable Conditional Access System, DCAS, server (110, 310, 420), comprising:
a message transmission unit (311) to transmit a DCAS message to a Digital Multimedia Broadcasting, DMB, terminal (120, 320, 410) through a first data channel, the DCAS message including DCAS information, wherein the DCAS information includes at least one of type information of the common conditional access client image, version information of the common conditional access client image, service identifier, ID, information of the second data channel, information about whether the common conditional access client image is encrypted, ID information of the DCAS server (110, 310, 420), hardware version information and software version information of a DCAS platform in the DMB terminal (120, 320, 410), and conditional access solution vendor ID information;
an image transmission unit (312) to transmit a common conditional access client image to the DMB terminal (120, 320, 410) through a second data channel, wherein the common conditional access client image includes a conditional access-related software module, wherein the conditional access-related software module indicates an EMM/ECM processing module for CW extraction; and
an information transmission unit (313) to perform, after the transmitting, to the DMB terminal (120, 320, 410), the DCAS message by the message transmission unit (311) and the common conditional access client image by the image transmission unit (312), authentication of the DMB terminal (120, 320, 410) when the DMB terminal (120, 320, 410) requests personalized information through a mobile communication channel, and to transmit the personalized information to the DMB terminal (120, 320, 410) through the mobile communication channel, the personalized information being associated with management of the common conditional access client image and being used for decoding the common conditional access client image.

2. The DCAS server (110, 310, 420) of claim 1, further comprising:
a message generation unit (314) to generate the DCAS message; and
a database (315) to store the common conditional access client image.

3. The DCAS server (110, 310, 420) of claim 1 or 2, wherein the first data channel is a Fast Information Channel, FIC, and. the second data channel is a Main Service Channel, MSC.

4. The DCAS server (110, 310, 420) of one of claims 1 to 3, wherein the information transmission unit (313) performs authentication of the DMB terminal (120, 320, 410) through a security channel formed between the DCAS server (110, 310, 420) and gateway server connecting a mobile communication network and a, DMB network.

5. The DCAS server (110, 310, 420) of one of claims 1 to 4, further comprising:
an information receiving unit (316) to receive content purchase information and a result of embedding the common conditional access client image from the DMB terminal (120, 320, 410) through the mobile communication channel.

6. A DMB terminal (120, 320, 410), comprising:
a message receiving unit (411) to receive a DCAS message from a DCAS server (110, 310, 420) through a first data channel, the DCAS message including DCAS information, wherein the DCAS information includes at least one of type information of the common conditional access client image, version information of the common conditional access client image, service identifier, ID, information of the second data channel, information about whether the common conditional access client image is encrypted, ID information of the DCAS server (110, 310, 420), hardware version information and software version information of a DCAS platform in the DMB terminal (120, 320, 410), and conditional access solution vendor ID information;
a determination unit (412) to determine whether to receive a common conditional access client image based on the DCAS message, wherein the common conditional access client image includes a conditional access-related software module, wherein the conditional access-related software module indicates an EMM/ECM processing module for CW extraction;
an image receiving unit (413) to receive the common conditional access client image from the DCAS server (110, 310, 420) through a second data channel, when it is determined to receive the common conditional access client image;
an information request unit (415) to request the DCAS server (110, 310, 420) for personalized information through a mobile communication channel, the personalized information being associated with management of the common conditional access client image; and
an authentication unit (414) to perform, after the receiving of the DCAS message and of the common conditional access client image from the DCAS server, mutual authentication associated with DCAS service management through the mobile communication channel when the DCAS server (110, 310, 420) is requested for personalized information;
an embedding unit (416) to receive the personalized information from the DCAS server (110, 310, 420) through the mobile communication channel, to decode the common conditional access client image based on the personalized information, and to embed the common conditional access client image.

7. The DMB terminal (120, 320, 410) of claim 6, wherein the first data channel is a FIC, and the second data channel is an MSC.

8. The DMB terminal (120, 320, 410) of claim 6 or 7, wherein the determination unit (412) parses the DCAS message to obtain the version information of the common conditional access client image and the conditional access solution vendor ID information, and determines whether to update a conditional access client image based on the version information of the common conditional access client image and the conditional access solution vendor ID information, the conditional access client image being previously embedded in the DMB terminal (120, 320, 410), and
the image receiving unit (413) parses the DCAS message to obtain the service ID information of the second data channel, when the conditional access client image is to be updated, and receives the common conditional access client image based on the service ID information of the second data channel.

9. A method of providing a DCAS service, the method comprising:
receiving, by a DMB terminal (120, 320, 410), a DCAS message from a DCAS server (110, 310, 420) through a first data channel, the DCAS message including DCAS information, wherein the DCAS information includes at least one of type information of the common conditional access client image, version information of the common conditional access client image, service identifier, ID, information of the second data channel, information about whether the common conditional access client image is encrypted, ID information of the DCAS server (110, 310, 420), hardware version information and software version information of a DCAS platform in the DMB terminal, and conditional access solution vendor ID information;
receiving, by the DMB terminal (120, 320, 410), a common conditional access client image, from the DCAS server (110, 310, 420) through a second data channel, wherein the common conditional access client image includes a conditional access-related software module, wherein the conditional access-related software module indicates an EMM/ECM processing module for CW extraction;
requesting, by the DMB terminal (120, 320, 410), the DCAS server (110, 310, 420) for personalized information through a mobile communication channel, the personalized information being associated with management of the common conditional access client image; and
after the receiving of the DCAS message and of the common conditional access client image from the DCAS server, performing, by the DMB terminal (120, 320, 410), mutual authentication associated with DCAS service management through the mobile communication channel when the DCAS server (110, 310, 420) is requested for personalized information;
decoding, by the DMIB terminal (120, 320, 410), the common conditional access client image based on the personalized information, and embedding the common conditional access client image.

10. The method of claim 9, further comprising:
determining, by the DMB terminal (120, 320, 410), whether to receive the common conditional access client image based on the DCAS message; and
receiving, by the DMB terminal (120, 320, 410), the common conditional access client image from the DCAS server (110, 310, 420), when it is determined to receive the common conditional access client image.

11. The method of claim 9 or 10, further comprising:
transmitting, by the DMB terminal (120, 320, 410), content purchase information and a result of embedding the common conditional access client image to the DCAS server (110, 310, 420) through the mobile communication channel.

12. A method of providing a DCAS service, the method comprising:
transmitting, by a DCAS server (110, 310, 420), a DCAS message to a DMB terminal (120, 320, 410) through a first data channel, the DCAS message including DCAS information, wherein the DCAS information includes at least one of type information of the common conditional access client image, version information of the common conditional access client image, service identifier, ID, information of the second data channel, information about whether the common conditional access client image is encrypted, ID information of the DCAS server (110, 310, 420), hardware version information and software version information of a DCAS platform in the DMB terminal (120, 320, 410), and conditional access solution vendor ID information;
transmitting, by the DCAS server (110, 310, 420), a common conditional access client image, to the INCAS terminal (120, 320, 410) through a second data channel, wherein the common conditional access client image includes a conditional access-related software module, wherein the conditional access-related software module indicates an EMM/ECM processing module for CW extraction; and
after the transmitting, to the DMB terminal (120, 320, 410), the DCAS message and the common conditional access client image, performing, by the DCAS server (110, 310, 420), authentication of the DMB terminal (120, 320, 410), and transmitting the personalized information to the DMB terminal (120, 320, 410) through a mobile communication channel, the personalized information being associated with management of the common conditional access client image and being used for decoding the common conditional access client image.

## Patentansprüche

1. Server (110, 310, 420) für herunterladbares System mit bedingtem Zugriff, DCAS-Server, der Folgendes umfasst:
eine Nachrichtensendeeinheit (311), um eine DCAS-Nachricht zu einem digitalen Multimediarundfunkendgerät (120, 320, 410) über einen ersten Datenkanal zu senden, wobei die DCAS-Nachricht DCAS-Informationen enthält und die DCAS-Informationen Typinformationen des gemeinsamen Client-Abbilds mit bedingtem Zugriff, Versionsinformationen des gemeinsamen Client-Abbilds mit bedingtem Zugriff, Dienstkennungsinformationen, Dienst-ID-Informationen, des zweiten Datenkanals, Informationen darüber, ob das gemeinsame Client-Abbild mit bedingtem Zugriff verschlüsselt ist, ID-Informationen des DCAS-Servers (110, 310, 420), Hardware-Versionsinformationen und Software-Versionsinformationen einer DCAS-Plattform im DMB-Endgerät (120, 320, 410) und/oder Lösungsanbieter-ID-Informationen mit bedingtem Zugriff enthalten;
eine Bildsendeeinheit (312), um ein gemeinsames Client-Abbild mit bedingtem Zugriff über einen zweiten Datenkanal zum DMB-Endgerät (120, 320, 410) zu senden, wobei das gemeinsame Client-Abbild mit bedingtem Zugriff ein mit bedingtem Zugriff verbundenes Software-Modul enthält und das mit bedingtem Zugriff verbundene Software-Modul ein EMM/ECM-Verarbeitungsmodul zur CW-Extraktion angibt; und
eine Informationssendeeinheit (313), um nach dem Senden zum DMB-Endgerät (120, 320, 410) der DCAS-Nachricht durch die Nachrichtensendeeinheit (311) und des gemeinsamen Client-Abbilds mit bedingtem Zugriff durch die Bildsendeeinheit (312) eine Authentifizierung des DMB-Endgeräts (120, 320, 410) durchzuführen, wenn das DMB-Endgerät (120, 320, 410) über einen Mobilkommunikationskanal personalisierte Informationen anfordert, und die personalisierten Informationen über den Mobilkommunikationskanal zum DMB-Endgerät (120, 320, 410) zu senden, wobei die personalisierten Informationen dem Management des gemeinsamen Client-Abbilds mit bedingtem Zugriff zugeordnet sind und zum Decodieren des gemeinsamen Client-Abbilds mit bedingtem Zugriff verwendet werden.

2. DCAS-Server (110, 310, 420) nach Anspruch 1, der ferner Folgendes umfasst:
eine Nachrichtenerzeugungseinheit (314), um die DCAS-Nachricht zu erzeugen; und
eine Datenbank (315), um das gemeinsame Client-Abbild mit bedingtem Zugriff zu speichern.

3. DCAS-Server (110, 310, 420) nach Anspruch 1 oder 2, wobei der erste Datenkanal ein schneller Informationskanal, FIC, ist und der zweite Datenkanal ein Hauptdienstkanal, MSC, ist.

4. DCAS-Server (110, 310, 420) nach einem der Ansprüche 1 bis 3, wobei die Informationssendeeinheit (313) eine Authentifizierung des DMB-Endgeräts (120, 320, 410) über einen Sicherheitskanal, der zwischen dem DCAS-Server (110, 310, 420) und einem Gateway-Server, der ein Mobilkommunikationsnetz und ein DMB-Netz verbindet, gebildet ist, durchführt.

5. DCAS-Server (110, 310, 420) nach einem der Ansprüche 1 bis 4, der ferner Folgendes umfasst:
eine Informationsempfangseinheit (316), um Inhaltserwerbsinformationen und ein Ergebnis des Einbettens des gemeinsamen Client-Abbilds mit bedingtem Zugriff über den Mobilkommunikationskanal vom DMB-Endgerät (120, 320, 410) zu empfangen.

6. DMB-Endgerät (120, 320, 410), das Folgendes umfasst:
eine Nachrichtenempfangseinheit (411), um eine DCAS-Nachricht von einem DCAS-Servers (110, 310, 420) über einen ersten Datenkanal zu empfangen, wobei die DCAS-Nachricht DCAS-Informationen enthält und die DCAS-Informationen Typinformationen des gemeinsamen Client-Abbilds mit bedingtem Zugriff, Versionsinformationen des gemeinsamen Client-Abbilds mit bedingtem Zugriff, Dienstkennungsinformationen, Dienst-ID-Informationen, des zweiten Datenkanals, Informationen darüber, ob das gemeinsame Client-Abbild mit bedingtem Zugriff verschlüsselt ist, ID-Informationen des DCAS-Servers (110, 310, 420), Hardware-Versionsinformationen und Software-Versionsinformationen einer DCAS-Plattform im DMB-Endgerät (120, 320, 410) und/oder Lösungsanbieter-ID-Informationen mit bedingtem Zugriff enthalten;
eine Bestimmungseinheit (412), um zu bestimmen, ob ein gemeinsames Client-Abbild mit bedingtem Zugriff auf der Grundlage der DCAS-Nachricht empfangen werden soll, wobei das gemeinsame Client-Abbild mit bedingtem Zugriff ein mit bedingtem Zugriff verbundenes Software-Modul enthält und das mit bedingtem Zugriff verbundene Software-Modul ein EMM/ECM-Verarbeitungsmodul zur CW-Extraktion angibt;
eine Bildempfangseinheit (413), um das gemeinsame Client-Abbild mit bedingtem Zugriff über einen zweiten Datenkanal vom DCAS-Server (110, 310, 420) zu empfangen, wenn bestimmt wird, das gemeinsame Client-Abbild mit bedingtem Zugriff zu empfangen;
eine Informationsanforderungseinheit (415), um personalisierte Informationen über einen Mobilkommunikationskanal vom DCAS-Server (110, 310, 420) anzufordern, wobei die personalisierten Informationen dem Management des gemeinsamen Client-Abbilds mit bedingtem Zugriff zugeordnet sind;
eine Authentifizierungseinheit (414), um nach dem Empfangen der DCAS-Nachricht und des gemeinsamen Client-Abbilds mit bedingtem Zugriff vom DCAS-Server eine gegenseitige Authentifizierung, die dem DCAS-Dienstmanagement zugeordnet ist, über den Mobilkommunikationskanal durchzuführen, wenn personalisierte Informationen vom DCAS-Server (110, 310, 420) angefordert werden; und
eine Einbetteinheit (416), um die personalisierten Informationen über den Mobilkommunikationskanal vom DCAS-Server (110, 310, 420) zu empfangen, das gemeinsame Client-Abbild mit bedingtem Zugriff auf der Grundlage der personalisierten Informationen zu decodieren und das gemeinsame Client-Abbild mit bedingtem Zugriff einzubetten.

7. DMB-Endgerät (120, 320, 410) nach Anspruch 6, wobei der erste Datenkanal ein FIC ist und der zweite Datenkanal ein MSC ist.

8. DMB-Endgerät (120, 320, 410) nach Anspruch 6 oder 7, wobei die Bestimmungseinheit (412) die DCAS-Nachricht parst, um die Versionsinformationen des gemeinsamen Client-Abbilds mit bedingtem Zugriff und die Lösungsanbieter-ID-Informationen mit bedingtem Zugriff zu erhalten und auf der Grundlage der Versionsinformationen des gemeinsamen Client-Abbilds mit bedingtem Zugriff und der Lösungsanbieter-ID-Informationen mit bedingtem Zugriff bestimmt, ob ein Client-Abbild mit bedingtem Zugriff aktualisiert werden soll, wobei das Client-Abbild mit bedingtem Zugriff zuvor in das DMB-Endgerät (120, 320, 410) eingebettet worden ist, und
die Bildempfangseinheit (413) die DCAS-Nachricht parst, um die Dienst-ID-Informationen des zweiten Datenkanals zu erhalten, wenn das Client-Abbild mit bedingtem Zugriff aktualisiert werden soll, und das Client-Abbild mit bedingtem Zugriff auf der Grundlage der Dienst-ID-Informationen des zweiten Datenkanals empfängt.

9. Verfahren zum Bereitstellen eines DCAS-Dienstes, wobei das Verfahren Folgendes umfasst:
Empfangen durch ein DMB-Endgerät (120, 320, 410) einer DCAS-Nachricht von einem DCAS-Server (110, 310, 420) über einen ersten Datenkanal, wobei die DCAS-Nachricht DCAS-Informationen enthält und die DCAS-Informationen Typinformationen des gemeinsamen Client-Abbilds mit bedingtem Zugriff, Versionsinformationen des gemeinsamen Client-Abbilds mit bedingtem Zugriff, Dienstkennungsinformationen, Dienst-ID-Informationen, des zweiten Datenkanals, Informationen darüber, ob das gemeinsame Client-Abbild mit bedingtem Zugriff verschlüsselt ist, ID-Informationen des DCAS-Servers (110, 310, 420), Hardware-Versionsinformationen und Software-Versionsinformationen einer DCAS-Plattform im DMB-Endgerät und/oder Lösungsanbieter-ID-Informationen mit bedingtem Zugriff enthalten;
Empfangen durch das DMB-Endgerät (120, 320, 410) eines gemeinsamen Client-Abbilds mit bedingtem Zugriff über einen zweiten Datenkanal vom DCAS-Server (110, 310, 420), wobei das gemeinsame Client-Abbild mit bedingtem Zugriff ein mit bedingtem Zugriff verbundenes Software-Modul enthält und das mit bedingtem Zugriff verbundene Software-Modul ein EMM/ECM-Verarbeitungsmodul zur CW-Extraktion angibt;
Anfordern durch das DMB-Endgerät (120, 320, 410) personalisierter Informationen über einen Mobilkommunikationskanal vom DCAS-Server (110, 310, 420), wobei die personalisierten Informationen dem Management des gemeinsamen Client-Abbilds mit bedingtem Zugriff zugeordnet sind;
Durchführen, nach dem Empfangen der DCAS-Nachricht und des gemeinsamen Client-Abbilds mit bedingtem Zugriff vom DCAS-Server durch das DMB-Endgerät (120, 320, 410) einer gegenseitigen Authentifizierung, die dem DCAS-Dienstmanagement zugeordnet ist, über den Mobilkommunikationskanal durchzuführen, wenn personalisierte Informationen vom DCAS-Server (110, 310, 420) angefordert werden; und
Decodieren durch das DMB-Endgerät (120, 320, 410) des gemeinsamen Client-Abbilds mit bedingtem Zugriff auf der Grundlage der personalisierten Informationen und Einbetten des gemeinsamen Client-Abbilds mit bedingtem Zugriff.

10. Verfahren nach Anspruch 9, das ferner Folgendes umfasst:
Bestimmen durch das DMB-Endgerät (120, 320, 410), ob das gemeinsame Client-Abbild mit bedingtem Zugriff auf der Grundlage der DCAS-Nachricht empfangen werden soll; und
Empfangen durch das DMB-Endgerät (120, 320, 410) des gemeinsamen Client-Abbilds mit bedingtem Zugriff vom DCAS-Server (110, 310, 420), wenn bestimmt wird, das gemeinsame Client-Abbild mit bedingtem Zugriff zu empfangen.

11. Verfahren nach Anspruch 9 oder 10, das ferner Folgendes umfasst:
Senden durch das DMB-Endgerät (120, 320, 410) von Inhaltserwerbsinformationen und eines Ergebnisses des Einbettens des gemeinsamen Client-Abbilds mit bedingtem Zugriff über den Mobilkommunikationskanal zum DCAS-Server (110, 310, 420).

12. Verfahren zum Bereitstellen eines DACS-Dienstes, wobei das Verfahren Folgendes umfasst:
Senden durch einen DCAS-Server (110, 310, 420) einer DCAS-Nachricht über einen ersten Datenkanal zu einem DMB-Endgerät (120, 320, 410), wobei die DCAS-Nachricht DCAS-Informationen enthält und die DCAS-Informationen Typinformationen des gemeinsamen Client-Abbilds mit bedingtem Zugriff, Versionsinformationen des gemeinsamen Client-Abbilds mit bedingtem Zugriff, Dienstkennungsinformationen, Dienst-ID-Informationen, des zweiten Datenkanals, Informationen darüber, ob das gemeinsame Client-Abbild mit bedingtem Zugriff verschlüsselt ist, ID-Informationen des DCAS-Servers (110, 310, 420), Hardware-Versionsinformationen und Software-Versionsinformationen einer DCAS-Plattform im DMB-Endgerät (120, 320, 410) und/oder Lösungsanbieter-ID-Informationen mit bedingtem Zugriff enthalten;
Senden durch den DCAS-Server (110, 310, 420) eines gemeinsamen Client-Abbilds mit bedingtem Zugriff über einen zweiten Datenkanal zum INCAS-Endgerät (120, 320, 410) zu senden, wobei das gemeinsame Client-Abbild mit bedingtem Zugriff ein mit bedingtem Zugriff verbundenes Software-Modul enthält und das mit bedingtem Zugriff verbundene Software-Modul ein EMM/ECM-Verarbeitungsmodul zur CW-Extraktion angibt; und
Durchführen durch den DCAS-Server (110, 310, 420) nach dem Senden der DCAS-Nachricht und des gemeinsamen Client-Abbilds mit bedingtem Zugriff zum DMB-Endgerät (120, 320, 410) einer Authentifizierung des DMB-Endgeräts (120, 320, 410), und Senden der personalisierten Informationen über einen Mobilkommunikationskanal zum DMB-Endgerät (120, 320, 410), wobei die personalisierten Informationen dem Management des gemeinsamen Client-Abbilds mit bedingtem Zugriff zugeordnet sind und zum Decodieren des gemeinsamen Client-Abbilds mit bedingtem Zugriff verwendet werden.

## Revendications

1. Serveur de système d'accès conditionnel téléchargeable, DCAS, (110, 310, 420), comprenant :
une unité de transmission de message (311) destinée à transmettre un message de système DCAS à un terminal de diffusion multimédia numérique, DMB, (120, 320, 410), par le biais d'un premier canal de données, le message de système DCAS incluant des informations de système DCAS, dans lequel les informations de système DCAS incluent au moins l'une parmi des informations de type de l'image de dispositif client d'accès conditionnel commune, des informations de version de l'image de dispositif client d'accès conditionnel commune, des informations d'identificateur, ID, de service du second canal de données, des informations indiquant si l'image de dispositif client d'accès conditionnel commune est chiffrée, des informations d'identificateur du serveur de système DCAS (110, 310, 420), des informations de version matérielle et des informations de version logicielle d'une plateforme de système DCAS dans le terminal de diffusion DMB (120, 320, 410), et des informations d'identificateur de fournisseur de solutions d'accès conditionnel ;
une unité de transmission d'image (312) destinée à transmettre une image de dispositif client d'accès conditionnel commune au terminal de diffusion DMB (120, 320, 410) par l'intermédiaire d'un second canal de données, dans lequel l'image de dispositif client d'accès conditionnel commune inclut un module logiciel connexe à l'accès conditionnel, dans lequel le module logiciel connexe à l'accès conditionnel indique un module de traitement de messages de commande d'habilitation / messages de gestion d'habilitation, EMM/ECM, pour une extraction de mot de commande, CW ; et
une unité de transmission d'informations (313) destinée à mettre en œuvre, après la transmission, au terminal de diffusion DMB (120, 320, 410), du message de système DCAS, par l'unité de transmission de message (311), et de l'image de dispositif client d'accès conditionnel commune, par l'unité de transmission d'image (312), une authentification du terminal de diffusion DMB (120, 320, 410), lorsque le terminal de diffusion DMB (120, 320, 410) demande des informations personnalisées par l'intermédiaire d'un canal de communication mobile, et à transmettre les informations personnalisées au terminal de diffusion DMB (120, 320, 410) par l'intermédiaire du canal de communication mobile, les informations personnalisées étant associées à la gestion de l'image de dispositif client d'accès conditionnel commune et étant utilisées en vue de décoder l'image de dispositif client d'accès conditionnel commune.

2. Serveur de système DCAS (110, 310, 420) selon la revendication 1, comprenant en outre :
une unité de génération de message (314) destinée à générer le message de système DCAS ; et
une base de données (315) destinée à stocker l'image de dispositif client d'accès conditionnel commune.

3. Serveur de système DCAS (110, 310, 420) selon la revendication 1 ou 2, dans lequel le premier canal de données est un canal d'information rapide, FIC, et le second canal de données est un canal de service principal, MSC.

4. Serveur de système DCAS (110, 310, 420) selon l'une quelconque des revendications 1 à 3, dans lequel l'unité de transmission d'informations (313) met en œuvre l'authentification du terminal de diffusion DMB (120, 320, 410) à travers un canal de sécurité formé entre le serveur de système DCAS (110, 310, 420) et un serveur de passerelle connectant un réseau de communication mobile et un réseau de diffusion DMB.

5. Serveur de système DCAS (110, 310, 420) selon l'une quelconque des revendications 1 à 4, comprenant en outre :
une unité de réception d'informations (316) destinée à recevoir des informations d'achat de contenu et un résultat de l'intégration de l'image de dispositif client d'accès conditionnel commune provenant du terminal de diffusion DMB (120, 320, 410) à travers le canal de communication mobile.

6. Terminal de diffusion DMB (120, 320, 410), comprenant :
une unité de réception de message (411) destinée à recevoir un message de système DCAS en provenance d'un serveur de système DCAS (110, 310, 420) à travers un premier canal de données, le message de système DCAS incluant des informations de système DCAS, dans lequel les informations de système DCAS incluent au moins l'une parmi des informations de type de l'image de dispositif client d'accès conditionnel commune, des informations de version de l'image de dispositif client d'accès conditionnel commune, des informations d'identificateur, ID, de service du second canal de données, des informations indiquant si l'image de dispositif client d'accès conditionnel commune est chiffrée, des informations d'identificateur du serveur de système DCAS (110, 310, 420), des informations de version matérielle et des informations de version logicielle d'une plateforme de système DCAS dans le terminal de diffusion DMB (120, 320, 410), et des informations d'identificateur de fournisseur de solutions d'accès conditionnel ;
une unité de détermination (412) destinée à déterminer s'il convient de recevoir une image de dispositif client d'accès conditionnel commune basée sur le message de système DCAS, dans lequel l'image de dispositif client d'accès conditionnel commune inclut un module logiciel connexe à l'accès conditionnel, dans lequel le module logiciel connexe à l'accès conditionnel indique un module de traitement de messages de commande d'habilitation / messages de gestion d'habilitation, EMM/ECM, pour une extraction de mot de commande, CW ;
une unité de réception d'image (413) destinée à recevoir l'image de dispositif client d'accès conditionnel commune en provenance du serveur de système DCAS (110, 310, 420) à travers un second canal de données, lorsqu'il est déterminé qu'il convient de recevoir l'image de dispositif client d'accès conditionnel commune ;
une unité de demande d'informations (415) destinée à demander, au serveur de système DCAS (110, 310, 420), des informations personnalisées, à travers un canal de communication mobile, les informations personnalisées étant associées à la gestion de l'image de dispositif client d'accès conditionnel commune ;
une unité d'authentification (414) destinée à mettre en œuvre, après la réception du message de système DCAS et de l'image de dispositif client d'accès conditionnel commune à partir du serveur de système DCAS, une authentification mutuelle associée à la gestion de service de système DCAS à travers le canal de communication mobile, lorsque des informations personnalisées sont demandées au serveur de système DCAS (110, 310, 420) ; et
une unité d'intégration (416) destinée à recevoir les informations personnalisées en provenance du serveur de système DCAS (110, 310, 420) à travers le canal de communication mobile, à décoder l'image de dispositif client d'accès conditionnel commune sur la base des informations personnalisées, et à intégrer l'image de dispositif client d'accès conditionnel commune.

7. Terminal de diffusion DMB (120, 320, 410) selon la revendication 6, dans lequel le premier canal de données est un canal d'information rapide, FIC, et le second canal de données est un canal de service principal, MSC.

8. Terminal de diffusion DMB (120, 320, 410) selon la revendication 6 ou 7, dans lequel l'unité de détermination (412) analyse le message de système DCAS en vue d'obtenir les informations de version de l'image de dispositif client d'accès conditionnel commune et les informations d'identificateur de fournisseur de solutions d'accès conditionnel, et détermine s'il convient de mettre à jour une image de dispositif client d'accès conditionnel sur la base des informations de version de l'image de dispositif client d'accès conditionnel commune et des informations d'identificateur de fournisseur de solutions d'accès conditionnel, l'image de dispositif client d'accès conditionnel étant préalablement intégrée dans le terminal de diffusion DMB (120, 320, 410) ; et
l'unité de réception d'image (413) analyse le message de système DCAS en vue d'obtenir les informations d'identificateur de service du second canal de données, lorsque l'image de dispositif client d'accès conditionnel doit être mise à jour, et reçoit l'image de dispositif client d'accès conditionnel commune sur la base des informations d'identificateur de service du second canal de données.

9. Procédé de fourniture d'un service de système DCAS, le procédé comprenant les étapes ci-dessous consistant à :
recevoir, par le biais d'un terminal de diffusion DMB (120, 320, 410), un message de système DCAS en provenance d'un serveur de système DCAS (110, 310, 420) à travers un premier canal de données, le message de système DCAS incluant des informations de système DCAS, dans lequel les informations de système DCAS incluent au moins l'une parmi des informations de type de l'image de dispositif client d'accès conditionnel commune, des informations de version de l'image de dispositif client d'accès conditionnel commune, des informations d'identificateur, ID, de service du second canal de données, des informations indiquant si l'image de dispositif client d'accès conditionnel commune est chiffrée, des informations d'identificateur du serveur de système DCAS (110, 310, 420), des informations de version matérielle et des informations de version logicielle d'une plateforme de système DCAS dans le terminal de diffusion DMB, et des informations d'identificateur de fournisseur de solutions d'accès conditionnel ;
recevoir, par le biais du terminal de diffusion DMB (120, 320, 410), une image de dispositif client d'accès conditionnel commune, en provenance du serveur de système DCAS (110, 310, 420) à travers un second canal de données, dans lequel l'image de dispositif client d'accès conditionnel commune inclut un module logiciel connexe à l'accès conditionnel, dans lequel le module logiciel connexe à l'accès conditionnel indique un module de traitement de messages de commande d'habilitation / messages de gestion d'habilitation, EMM/ECM, pour une extraction de mot de commande, CW ;
demander, par le biais du terminal de diffusion DMB (120, 320, 410), au serveur de système DCAS (110, 310, 420), des informations personnalisées, à travers un canal de communication mobile, les informations personnalisées étant associées à la gestion de l'image de dispositif client d'accès conditionnel commune ; et
après la réception du message de système DCAS et de l'image de dispositif client d'accès conditionnel commune en provenance du serveur de système DCAS, mettre en œuvre, par le biais du terminal de diffusion DMB (120, 320, 410), une authentification mutuelle associée à la gestion de service de système DCAS à travers le canal de communication mobile, lorsque les informations personnalisées sont demandées au serveur de système DCAS (110, 310, 420) ;
décoder, par le biais du terminal de diffusion DMB (120, 320, 410), l'image de dispositif client d'accès conditionnel commune, sur la base des informations personnalisées, et intégrer l'image de dispositif client d'accès conditionnel commune.

10. Procédé selon la revendication 9, comprenant en outre les étapes ci-dessous consistant à :
déterminer, par le biais du terminal de diffusion DMB (120, 320, 410), s'il convient de recevoir l'image de dispositif client d'accès conditionnel commune sur la base du message de système DCAS ; et
recevoir, par le biais du terminal de diffusion DMB (120, 320, 410), l'image de dispositif client d'accès conditionnel commune en provenance du serveur de système DCAS (110, 310, 420), lorsqu'il est déterminé qu'il convient de recevoir l'image de dispositif client d'accès conditionnel commune.

11. Procédé selon la revendication 9 ou 10, comprenant en outre l'étape ci-dessous consistant à :
transmettre, par le biais du terminal de diffusion DMB (120, 320, 410), des informations d'achat de contenu et un résultat de l'intégration de l'image de dispositif client d'accès conditionnel commune, au serveur de système DCAS (110, 310, 420), à travers le canal de communication mobile.

12. Procédé de fourniture d'un service de système DCAS, le procédé comprenant les étapes ci-dessous consistant à :
transmettre, par le biais d'un serveur de système DCAS (110, 310, 420), un message de système DCAS à un terminal de diffusion DMB (120, 320, 410), par le biais d'un premier canal de données, le message de système DCAS incluant des informations de système DCAS, dans lequel les informations de système DCAS incluent au moins l'une parmi des informations de type de l'image de dispositif client d'accès conditionnel commune, des informations de version de l'image de dispositif client d'accès conditionnel commune, des informations d'identificateur, ID, de service du second canal de données, des informations indiquant si l'image de dispositif client d'accès conditionnel commune est chiffrée, des informations d'identificateur du serveur de système DCAS (110, 310, 420), des informations de version matérielle et des informations de version logicielle d'une plateforme de système DCAS dans le terminal de diffusion DMB (120, 320, 410), et des informations d'identificateur de fournisseur de solutions d'accès conditionnel ;
transmettre, par le biais du serveur de système DCAS (110, 310, 420), une image de dispositif client d'accès conditionnel commune, au terminal de diffusion DMB (120, 320, 410) par l'intermédiaire d'un second canal de données, dans lequel l'image de dispositif client d'accès conditionnel commune inclut un module logiciel connexe à l'accès conditionnel, dans lequel le module logiciel connexe à l'accès conditionnel indique un module de traitement de messages de commande d'habilitation / messages de gestion d'habilitation, EMM/ECM, pour une extraction de mot de commande, CW ; et
après la transmission, au terminal de diffusion DMB (120, 320, 410), du message de système DCAS et de l'image de dispositif client d'accès conditionnel commune, mettre en œuvre, par le biais du serveur de système DCAS (110, 310, 420), une authentification du terminal de diffusion DMB (120, 320, 410), et transmettre les informations personnalisées au terminal de diffusion DMB (120, 320, 410) par l'intermédiaire du canal de communication mobile, les informations personnalisées étant associées à la gestion de l'image de dispositif client d'accès conditionnel commune et étant utilisées en vue de décoder l'image de dispositif client d'accès conditionnel commune.
